# EUROPEAN PATENT APPLICATION

(11) **EP 4 417 095 A1**
(43) Date of publication of application: **21.08.2024**
(21) Application number: 22880458.9
(22) Date of filing: 19.09.2022
(51) Int. Cl.: A47J 36/34, A47J 47/16

(54) **PROTECTIVE RING FOR PAELLA PANS, POTS AND OTHER VESSELS THAT ARE MADE OF METAL**

(30) Priority: 14.10.2021 ES 202132013 U
(71) Applicant: Valver Air Speed, S.L., 46200 Paiporta (ES)
(72) Inventor: VERDU ALVARO, Alberto, 46200 Paiporta Valencia (ES)
(74) Representative: Polo Montañes, Carlos
(86) International application number: PCT/ES2022/070593
(87) International publication number: WO 2023/062259

(57) **Abstract**

The invention relates to a protective ring for paella pans, pots and other vessels that are made of metal, particularly designed to prevent burning the surface of a table or countertop where the corresponding paella pan, pot, or kitchen accessory will be placed, all this such that it can be applied on the bottom thereof in a completely automatic manner, without having to use hands. The device is made up of an annular body (1), which defines a spacer element between the paella pan, pot, tray, or vessel that is made of metal and the surface on which said vessel is deposited, wherein a plurality of magnets (3) are established on the upper support surface of the annular body (1), fixed to said annular body (1).

## Description

### OBJECT OF THE INVENTION

The present invention relates to a protective ring for paella pans and kitchen accessories that are made of metal of significant dimensions and/or weight, such as pots, oven trays, and the like, which require using both hands for handling.

The object of the invention is to provide a device which prevents burning the surface of a table or countertop where the corresponding paella pan, pot, or kitchen accessory will be placed, and which can be applied on the bottom thereof in a completely automatic manner, without having to use hands as they are occupied.

Therefore, the invention is comprised in the field of kitchenware and barbecues.

### BACKGROUND OF THE INVENTION

As is known, accessories such as place mats are commonly used as an insulating element which prevents burning surfaces such as countertops, tablecloths, tables, and the like when placing thereon a paella pan, pot, or similar cooking device removed from the fire.

These devices are manually placed on the surface to be protected, defining a thermal barrier which prevents damaging said surface.

Although these devices can be previously placed on said surface before having to handle the corresponding paella pan or element, sometimes the paella pan must first be supported on a countertop or another place of the final location of the paella pan, for whatever reason, such that it is impossible to move the place mats from the countertop to the table as both hands are needed to handle said paella pan.

### DISCLOSURE OF THE INVENTION

The proposed protective ring for paella pans, pots and other vessels that are made of metal solves in a fully satisfactory manner the problems described above based on a simple but effective solution.

To that end, and more specifically, the device of the invention is formed as a ring-shaped body which can be circular, rectangular, square, polygonal, etc., depending on the specific needs of each case, and which can be obtained from plastic, wood, metal, etc., defining a separating/distancing means between the corresponding paella pan, pot, tray or vessel that is made of metal and the surface to be protected, with the particularity that the device has on its upper face a series of magnets linked thereto, allowing it to adhere automatically on the lower base of the corresponding paella pan, pot, tray, or vessel that is made of metal, for example by placing it next to the cooking fire, such that the corresponding paella pan or element can be moved together with the device fixed to the bottom thereof to the table or final placement location envisaged for said pan or element.

The magnets can be fixed using any conventional means to the surface of the ring, although they will preferably be detachable, so as to be able to personalize the device depending on the weight to be supported.

A very simple but highly effective device that is easy to use and allows using both hands to handle the corresponding paella pan, pot, tray, or accessory is thereby obtained.

### BRIEF DESCRIPTION OF THE DRAWINGS

To complement the description that will be made below and for the purpose of helping to better understand the features of the invention according to a preferred practical embodiment thereof, a set of drawings is attached as an integral part of said description in which the following is depicted in a non-limiting illustrative manner:

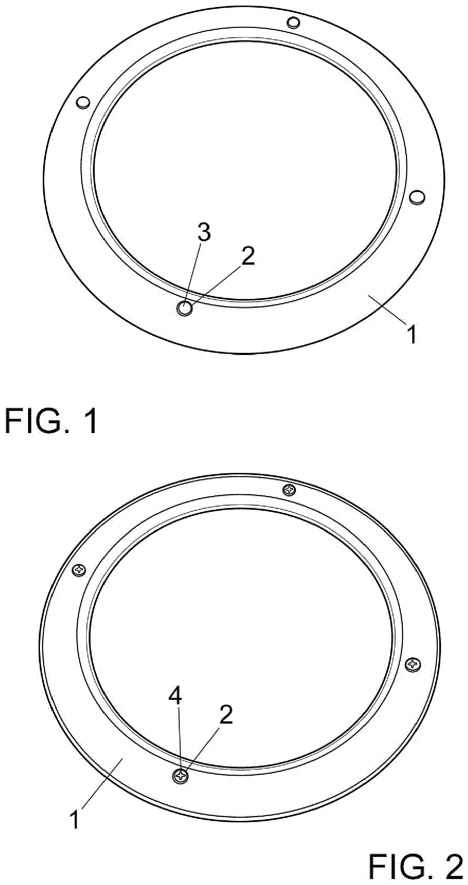

Figure 1 shows a top perspective view of a protective ring for paella pans, pots and other vessels that are made of metal elaborated according to the object of the present invention.
Figure 2 shows a lower perspective view of the device of the preceding figure.
Figure 3 shows a profile view of the device applied on the bottom of a paella pan in an arrangement to be deposited on a table.

### PREFERRED EMBODIMENT OF THE INVENTION

In view of the mentioned figures, it can be observed how the proposed device is made up of an annular body (1) which in the chosen practical embodiment is circular as it is envisaged to be applied under a paella pan (5), but it may adopt other shapes such as, for example, rectangular, in order to adapt more uniformly to an oven tray, quadrangular, elliptical, polygonal, etc., without this affecting the essence of the invention.

This annular body (1) will be obtained from a heat-resistant material such as metal, wood, certain plastics, or composite materials, such that it defines a support surface for the corresponding paella pan (5), pot, tray, or kitchen accessory, with the particularity that a plurality of magnets (3) are established on said support surface, fixed to the annular body (1).

In the chosen embodiment, the magnets are fixed by means of screws (4) going through holes (2), although they may be fixed using any other conventional means that withstand the heat that they will support.

This solution is the most suitable since the screws may have a length greater than the width of the body of the ring, such that the magnets have a slight vertical clearance with respect to the annular body which allows the adaptation of the device to paella pans or other kitchen utensils having a bottom that is not perfectly flat, which happens all too often.

Therefore, the annular body may be manufactured with a large number of holes (2) in which there are selectively placed, and depending on the specific needs of each case, more or less magnets (3) depending on the weight and dimensions of the object to be linked.

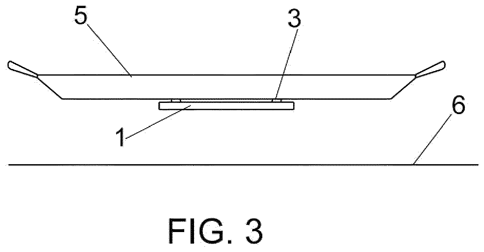

Based on this structure and as shown in Figure 3, the paella pan (5) can be moved from the fire or stoves to a nearby place where the tablecloth is placed such as, for example, a bench or countertop, being magnetically adhered to the bottom thereof in a completely stable manner, facilitating the work of moving and depositing the assembly on a table (6) without any risk of damaging said table or the tablecloth on which the assembly is placed.

## Claims

1. A protective ring for paella pans, pots and other vessels that are made of metal, **characterized in that** it is made up of an annular body (1), which defines a spacer element between the paella pan, pot, tray, or vessel that is made of metal and the surface on which said vessel is deposited, with the particularity that a plurality of magnets (3) are established on the upper support surface of the annular body (1), fixed to said annular body (1).

2. The protective ring for paella pans, pots and other vessels that are made of metal according to claim 1, **characterized in that** the annular body adopts a circular, elliptical, quadrangular, rectangular, or polygonal configuration.

3. The protective ring for paella pans, pots and other vessels that are made of metal according to claim 1, **characterized in that** the annular body (1) is obtained from a heat-resistant material, such as metal, wood, certain plastics, or composite materials.

4. The protective ring for paella pans, pots and other vessels that are made of metal according to claim 1, **characterized in that** the magnets (3) can be attached/detached with respect to the annular body (1).

5. The protective ring for paella pans, pots and other vessels that are made of metal according to claim 1, **characterized in that** the magnets (3) are fixed to the annular body (1) by means of screws (4) going through holes (2) provided in the annular body (1).

6. The protective ring for paella pans, pots and other vessels that are made of metal according to claims 1 and 5, **characterized in that** the screws (4) have a length greater than the width of the body of the ring, such that the magnets have a vertical clearance with respect to the annular body to which they are linked.
